# EUROPEAN PATENT SPECIFICATION

(11) **EP 1 995 400 B1**
(45) Date of publication and mention of the grant of the patent: **29.03.2017**
(21) Application number: 08156574.9
(22) Date of filing: 20.05.2008
(51) Int. Cl.: E05B 83/36, E05B 85/18

(54) **Handle Apparatus**
Griffvorrichtung
Dispositif de poignée

(30) Priority: 22.05.2007 JP 2007135649
(43) Date of publication of application: 26.11.2008
(73) Proprietor: Alpha Corporation, Yokohama-shi, Kanagawa 236-0004 (JP); Nissan Motor Co., Ltd., Yokohama-shi, Kanagawa 221-0023 (JP)
(72) Inventor: Kagawa, Takahiro, Yokohama-shi Kanagawa 236-0004 (JP); Abe, Keita, Atsugi-shi Kanagawa 243-0123 (JP)
(74) Representative: Weickmann & Weickmann PartmbB

(56) References cited:
- GB-A- 2 410 312
- JP-A- 11 101 040
- JP-U- H02 101 971

## Description

### BACKGROUND OF THE INVENTION

### <FIELD OF THE INVENTION>

The present invention relates to a handle apparatus.

### <RELATED ART>

JP-H02 101971 U discloses a handle apparatus in which a door lock apparatus is operated by an operation to a handle main body. The handle apparatus is configured such that the handle main body is connected to a bracket (handle base). The handle main body includes an arm which is inserted into a rear surface of the handle base through an opening (arm insertion hole) formed through the handle base. Also, the handle base includes a swing lever which is driven to rotate by a rotation of the arm in accordance with a rotation of the handle main body.

A flat plate-like blocking portion extends from the front end of the rotating swing lever. When the swing lever moves to an operational rotation position, the blocking portion moves to a rear surface of the arm insertion hole. In this state, the arm insertion hole is blocked by the blocking portion, thereby preventing a case in which a tool or the like is inserted from an outside of the door into the arm insertion hole to illegally operate components disposed inside the door. However, in the above handle apparatus, when a gap formed between the blocking portion and an opening end of the arm insertion hole is wide, a tool or the like may be inserted into a path formed in a slant direction so that a problem may arise in that a desired obj ect may not be achieved. Such problem may be solved a little by arranging the blocking portion close to the opening end of the arm insertion hole. However, since the swing lever as a movable member may interfere with other components like the handle base when they move, an another problem would arise in that a degree of freedom in design of a whole handle apparatus decreases by adding structures to the flat plate-like blocking portion having a predetermined area.

Additionally, since the blocking portion is formed into a flat plate shape, a problem may arise in that the front end of the tool or the like is inserted along the blocking portion and the blocking portion is used as a guide when searching the insertion hole.

### SUMMARY OF THE INVENTION

It is the object of the invention provide a handle apparatus adapted to surely prevent an illegal operation through an arm operation hole without decreasing a degree of freedom in design.

For achieving this object the present invention proposes a handle apparatus having the features of claim 1.

Since the rising piece 11 erecting from the side edge of the blocking piece 8 serves as a regulation wall for preventing a case in which a tool moves along the blocking piece 8 while pressing against the front end of the blocking piece 8 so as to search the insertion path 10 to a position around the cylinder lock 9, it is possible to prevent an illegal operation.

In the handle apparatus, a blocking wall (12) may erect from the handle base (3) along the rising piece (11) of the swing lever (4) located in the operational rotation position. A base end of the blocking wall (12) may be positioned in a direction of a free end of the rising piece (11).

In the handle apparatus, the rising piece (11) may overlap with the blocking wall (12) in a height direction to completely block the path (10).

In the handle apparatus, an escutcheon portion (14) may be provided on the handle base (3) and disposed on an outer panel (13) of the door (2) to form an outer surface of the door (2). The operation arm (5) may be inserted through the arm insertion hole (6) formed on the escutcheon portion (14) and connected to a hinge arm (15) formed in a rear surface of the escutcheon portion (14). The cylinder lock (9) may be fixed to a cylinder fixed portion (16) formed in the rear surface of the escutcheon portion (14).

According to one or more embodiments of the invention, a handle apparatus includes a handle main body 7 which is rotatably connected to a handle base 3 fixed to a door 2 of a vehicle. The handle main body 7 includes an operation arm 5 which is inserted into the inside of the door 2 through an arm insertion hole 6. Also, a swing lever 4 is rotatably connected to the handle base 3 and thus the swing lever 4 is driven to rotate from an initial rotation position to an operational rotation position when the handle main body 7 is pulled up while being attached to the door 2.

The swing lever 4 is connected to the door lock apparatus 1 through appropriate transmission members such as a rod and a wire. When the swing lever 4 is rotated to the operational rotation position, a door lock apparatus 1 releases a restraining operation of the door 2, and thus it is possible to open the door 2.

The door lock apparatus 1 is connected to a cylinder lock 9 through the appropriate transmission members so as to switch between lock/unlock states, and the cylinder lock 9 can release the door lock apparatus 1 only in the unlock state.

When the handle main body 7 is pulled up, the arm insertion hole 6 covered by a handle portion 17 of the handle main body 7 is exposed to the outside, and thus a tool or the like can be inserted into a gap formed between the arm insertion hole 6 and the operation arm 5 of the handle main body 7. If the gap is formed into a linear shape around the cylinder lock 9 or communicates with a path 10 with a crank shape, for example, the tool may move along the path 10 to separate the transmission members connected to the door lock apparatus 1 or to perform an illegal operation such as a compulsory driving operation of a connection portion of the transmission members.

A blocking piece 8 and a rising piece 11 formed in the swing lever 4 block the path 10 to prevent the illegal unlock operation of the door 2. The blocking piece 8 is located at a position in rear of the arm insertion hole 6 when the handle main body 7 is pulled up, that is, the swing lever 4 is rotated to the operational rotation position. Then, the blocking piece 8 blocks the path 10 which is inserted through the arm insertion hole 6 and reaches the inside of the door 2 in a front view. On the contrary, the rising piece 11 is configured such that a side edge of the blocking piece 8 is bent to the outside of the door 2 to narrow a gap formed between the side edge of the blocking piece 8 and the end edge of the arm insertion hole 6.

Accordingly, in the embodiments of the invention, since the blocking piece 8 and the rising piece 11 prevent a tool from being inserted into the inside of the door 2 through the arm insertion hole 6, it is not necessary to approach the blocking piece 8 to the opening end of the arm insertion hole 6 in the operational rotation position. For this reason, since it is not necessary to set an operational region of the blocking piece 8 to a surface close to the opening end of the arm insertion hole 6, a degree of freedom in arrangement of the blocking piece 8 increases, thereby easily performing a design thereof in consideration of interference with other components.

Further, since the operation surface of the blocking piece 8 is disposed away from the opening end of the arm insertion hole 6, it is possible to dispose a protrusion in a surface of the blocking piece 8 opposed to the arm insertion hole 6. As a result, for example, as shown in the drawing, since it is possible to use the blocking piece 8 as a connection portion of the transmission members with respect to the door lock apparatus 1, it is possible to efficiently use a space compared with the known example in which a surface of the blocking piece 8 opposed to the arm insertion hole 6 needs to be formed into a flat surface as a whole.

Moreover, since when a blocking wall 12 erects from the handle base 3 so as to be positioned along the rising piece 11 of the swing lever 4 located in the operational rotation position, the blocking wall 12 serves as a wall for preventing a case in which a tool moves while sliding on the wall of the handle base 3 to the path 10 around the cylinder lock 9, it is possible to further prevent an illegal operation.

The handle apparatus may be configured as an assembly in which the handle main body 7, the cylinder lock 9, and the like are fixed to the handle base 3 or may be configured such that they are connected to each other through the door 2. When the whole handle apparatus is configured as an assembly, the handle base 3 can be provided with an escutcheon portion 14 which is disposed in an outer panel 13 of the door 2 in the handle base 3 to form an outer surface of the door 2. Accordingly, the handle apparatus is attached to the door 2 in the manner that the escutcheon portion 13 blocks an attachment hole 13a formed through the outer panel 13 of the door 2.

In addition, when the respective components are connected to one another through the door 2, the handle portion 17 of the handle main body 7 is exposed from the outer surface of the door 2 and the operation arm 5, which is inserted into the inside of the door 2 through the arm insertion hole 6 formed through the outer panel 13 of the door 2, is connected to the handle base 3 fixed to the inside of the door 2.

According to the embodiments of the invention, it is possible to surely prevent an illegal operation through an arm insertion hole without decreasing a degree of freedom in design.

Other aspects and advantages of the invention will be apparent from the following description, the drawings and the claims.

### BRIEF DESCRIPTION OF THE DRAWINGS

Fig. 1(a) is a front view of a handle apparatus of an exemplary embodiment, and Fig. 1(b) is a sectional view taken along the line 1B-1B in Fig. 1(a).
Fig. 2 is a rear view illustrating the handle apparatus.
Fig. 3 (a) is a view illustrating a state where the handle main body is pulled up, Fig. 3(b) is a sectional view taken along the line 3B-3B shown in Fig. 2 in the state where the handle main body is located in an initial rotation position, and Fig. 3 (c) is a view corresponding to Fig. 3 (b) in the state where the handle main body is pulled up.
Fig. 4(a) is a perspective view of the handle apparatus when viewed from the opposite side, and Fig. 4(b) is a rear view.
Fig. 5 is a rear view illustrating a state where the handle main body is pulled up.

### DETAILED DESCRIPTION OF THE EXEMPLARY EMBODIMENTS

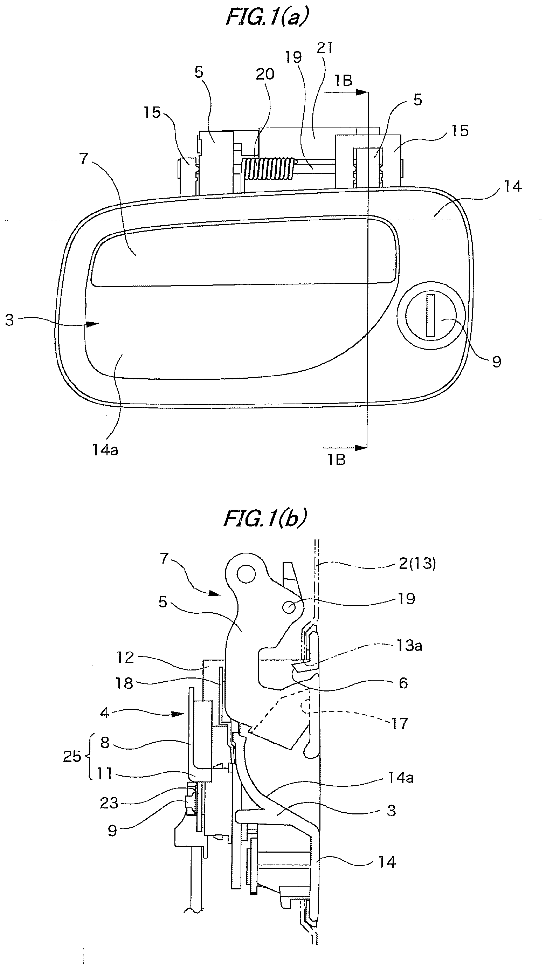

An exemplary embodiment of the invention will be described below in detail with reference to the accompanying drawings. As shown in Figs. 1 (a) and 1 (b), a handle apparatus is configured such that a handle main body 7 is connected to a handle base 3, and the handle base 3 is fixed to a vehicle door 2 as shown in the drawing. A handle attachment hole 13a is formed through an outer panel 13 of the vehicle door 2 so that the handle apparatus is fixed thereto by inserting the handle apparatus therethrough from the outside of the vehicle door 2. Also, an escutcheon portion 14 is formed in the handle base 3 so as to block the handle attachment hole 13a. An end cover 18 is mounted between the escutcheon portion 14 and the outer panel 13.

The handle main body 7 includes two operation arms 5 which are formed in the rear surface of a handle portion 17 in a protruding manner. In order to expose only the handle portion 17 from the outer surface of the vehicle door 2, each of the operation arms 5 is inserted into the inside of the vehicle door 2 through the arm insertion hole 6 formed through the handle base 3 and is vertically rotatably connected to each of hinge arms 15 which are formed in the rear surface of the escutcheon portion 14 of the handle base 3 in a protruding manner. A handle concave portion 14a is formed in the escutcheon portion 14 so as to provide a handle base to the handle portion 17 of the handle main body 7.

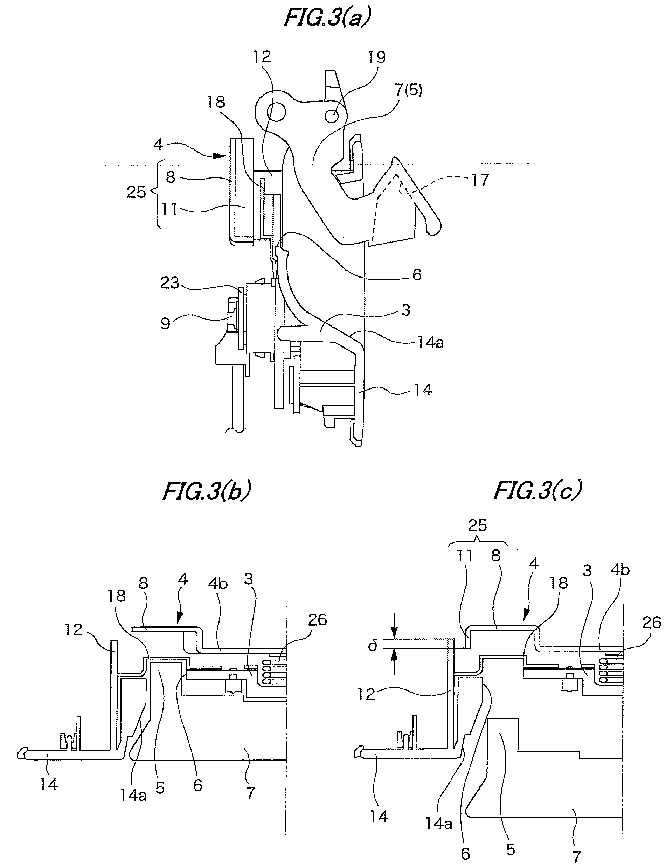

The handle main body 7 is rotatable from an initial rotation position in which the handle portion 17 is positioned along the surface of the escutcheon portion 14, that is, the surface of the outer panel 13 of the vehicle door 2 as shown in Fig. 1(b) to an operational rotation position in which the handle portion 17 is pulled up to be rotated upward as shown in Fig. 3(a). At this time, the handle main body 7 is urged to the initial rotation position by a torsion spring 20 wound around a support shaft 19 which connects the operation arms 5 to the hinge arms 15. Additionally, a counter weight 21 having a predetermined weight is fixed between the two operation arms 5, thereby preventing operating force from being generated by inertia with respect to the handle main body 7 toward the operational rotation position.

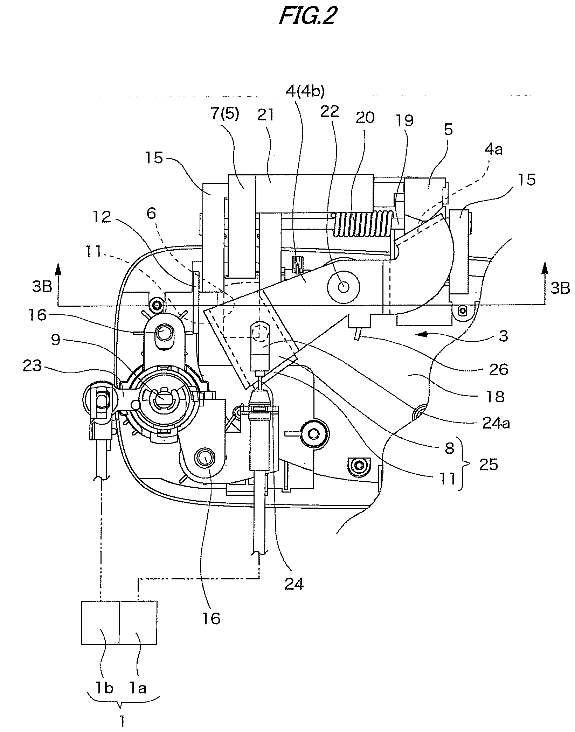

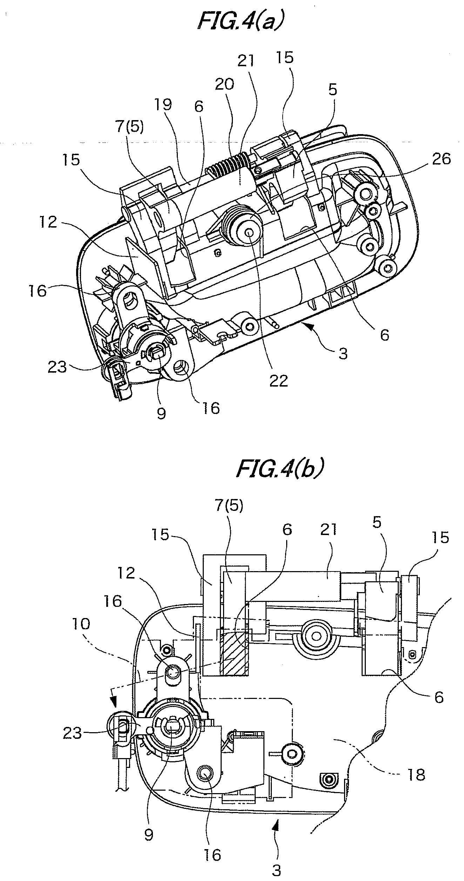

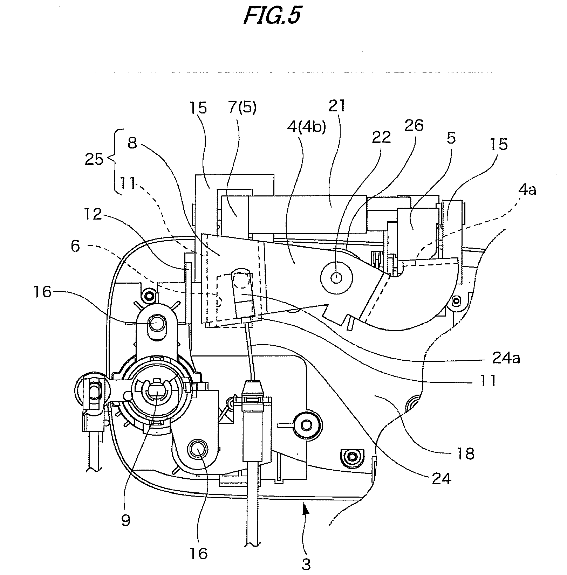

Reference Numeral 4 denotes a swing lever connected to the rear surface of the escutcheon portion 14 and rotates vertically about a pivot 22 from the initial rotation position shown in Fig. 2 to the operational rotation position shown in Fig. 5. As shown in Fig. 4(a), a torsion spring 26 is wound around the pivot 22 so as to urge the swing lever 4 to the initial rotation position. The swing lever 4 includes an interference piece 4a with respect to the operation arm 5 of the handle main body 7 and the interference piece 4a is driven when the handle main body 7 is rotated to the operational rotation position.

Reference Numeral 9 denotes a cylinder lock held in the escutcheon portion 14 and the cylinder lock is connected to a cylinder lever 23 which is rotated by an unlock key (not shown). Since a fitting work (panel passing work) is easy in that the rear surface of the handle base 3 is inserted into the handle attachment hole 13a of the outer panel 13, in this exemplary embodiment, the cylinder lock 9 is fixed to a cylinder fixed portion 16 of the escutcheon portion 14 from the inside of the vehicle door 2 after the handle base 3 is inserted through the handle attachment hole 13a.

After the handle apparatus is fixed to the vehicle door 2, the swing lever 4 is connected to a latch operation portion 1a of the door lock apparatus 1 through a cable 24 and then the cylinder lever 23 is connected to a lock/unlock operation portion 1b of the door lock apparatus 1. When the swing lever 4 moves to the operational rotation position in this state, a latch (not shown), which restrains the vehicle door 2 to maintain a closed state, is released, and thus it is possible to open the vehicle door 2. Additionally, when the cylinder lock 9 is locked, the lock/unlock operation portion 1b transits from the unlock state to the lock state, and thus it is not possible to release the latch operation using the latch operation portion 1a.

As shown in Figs. 3(a) and 4, when the handle main body 7 is pulled up to be rotated to the operational rotation position, a large gap is formed in a backside of the operation arms 5 of the handle main body 7. At this time, the end cover 18, which blocks the gap in appearance, can be easily broken by a breaking operation. When the end cover 18 is broken, for example, a tool may be inserted through the gap and moved along a path 10 around the cylinder lock 9 indicated by the dashed line shown in Fig. 4(b). When the tool is inserted into a position around the cylinder lock 9, a problem arises in that the door lock apparatus 1 maybe illegally unlocked. Accordingly, a blocking portion 25 and a blocking wall 12 are disposed therein so as to block or narrow the path 10.

As shown in Figs. 2, 3(a), 3(b) and 3(c), the blocking portion 25 includes a blocking piece 8 formed in the swing lever 4 and a rising piece 11 erecting from a side edge of the blocking piece 8. The blocking piece 8 extends to a connection piece 4b by the pivot 22 of the swing lever 4 and is formed into a flat plate which is perpendicular to the rotation center. As shown in Fig. 5, the blocking piece 8 is formed in a position and has a size which overlaps with the arm insertion hole 6 in a front view when the swing lever 4 moves to the operational rotation position.

Additionally, in order to efficiently use a space in the rear surface of the handle base 3, the blocking piece 8 is commonly used as an attachment piece of the cable 24 which connects the swing lever 4 to the door lock apparatus 1. In order to prevent an interference between an attachment portion 24a of the cable 24 which protrudes to the rear-surface wall of the handle base 3 and the rear-surface wall of the handle base 3, the connection piece 4b is bent backward and a movable space of the attachment portion 24a is ensured between the blocking piece 8 and the rear surface of the handle base 3.

Meanwhile, the rising piece 11 erects from the side edge of the blocking piece 8, which is substantially formed in a rectangular shape in a front view, to the outer surface of the vehicle door 2. The rising piece 11 is formed therein so as to narrow the tool insertion path 10 together with the blocking piece 8. At this time, the rising piece 11 is formed in a position in which the tool insertion path 10 is efficiently blocked. In this embodiment, supposing that the path 10 shown in Fig. 4(b) is the tool insertion path 10, as shown in Fig. 5, the rising piece 11 is formed in two sides facing the cylinder lock 9 when the swing lever 4 moves to the operation rotation position.

As shown in Figs. 3(b) and 3(c), the blocking wall 12 protrudes from the rear surface of the escutcheon portion 14 to the inside of the vehicle door 2. As shown in Fig. 3(c), the blocking wall 12 has a height dimension which inwardly overlaps (at overlap margin δ) with the rising piece 11 of the swing lever 4 when the swing lever 4 moves to the operational rotation position. Also, the blocking wall 12 is disposed along the rising piece 11 in the operation rotation position, thereby completely blocking the tool insertion path 10.

The blocking wall 12 erecting from the rear surface of the handle base 3 does not deteriorate the panel passing work of the handle apparatus. Also, the blocking wall 12 is disposed in a position which can efficiently block the tool insertion hole 10. In this embodiment, it is the most important to block the path 10 shown in Fig. 4(b). Accordingly, as shown in Fig. 5, the blocking wall 12 is disposed in a position corresponding to one side of the rising piece 11 of the swing lever 4.

While description has been made in connection with embodiments of the present invention, it will be obvious to those skilled in the art that various changes and modification maybe made therein without departing from the present invention. It is aimed, therefore, to cover in the appended claims all such changes and modifications falling within the scope of the present invention.

### [Description of Reference Numerals and Signs]

- 1:: DOOR LOCK APPARATUS
- 2:: DOOR
- 3:: HANDLE BASE
- 4:: SWING LEVER
- 5:: OPERATION ARM
- 6:: ARM INSERTION HOLE
- 7:: HANDLE MAIN BODY
- 8:: BLOCKING PIECE
- 9:: CYLINDER LOCK
- 10:: PATH
- 11:: RISING PIECE
- 12:: BLOCKING WALL
- 13:: OUTER PANEL
- 14:: ESCUTCHEON PORTION
- 15:: HINGE ARM
- 16:: CYLINDER FIXED PORTION

## Claims

1. A handle apparatus comprising:
a handle base (3) fixable to a door (2) of a vehicle which is maintained in a closed state while being restrained by a door lock apparatus (1);
a swing lever (4) heldable inside the door (2) and connected to the handle base (3) to be vertically rotatable, a door restraining release operation of the door lock apparatus (1) may be carried out by rotating the swing lever (4) from an initial rotation position to an operational rotation position;
a handle main body (7) connected to the handle base (3) to be pulled up from an initial rotation position to an operational rotation position and including an operation arm (5) insertable inside the door (2) through an arm insertion hole (6) to drive the swing lever (4) to the operational rotation position when the handle main body (7) is pulled up;
a blocking piece (8) that is provided on the swing lever (4) and moves to a rear side of the arm insertion hole (6) when the swing lever (4) is located in the operational rotation position so that the arm insertion hole (6) may be blocked from an inside of the door (2); and
a rising piece (11) protruding from a side edge of the blocking piece (8) toward an outside of the door (2) when the handle apparatus is fixed to the door (2) so as to narrow a path (10) from the outside of the door through a gap between the arm insertion hole (6) and the blocking piece (8) to a position around a cylinder lock (9) for locking or unlocking the door lock apparatus (1) when the handle main body (7) is rotated to the operational rotation position,
**characterised in that**
the rising piece (11) serves as a regulation wall for preventing a case in which a tool moves along the blocking piece (8) while pressing against the front end of the blocking piece (8) so as to search the path (10) to the position around the cylinder lock (9).

2. The handle apparatus according to Claim 1, further comprising:
a blocking wall (12) erecting from the handle base (3) along the rising piece (11) of the swing lever (4) located in the operational rotation position, a base end of the blocking wall (12) being positioned in a direction of a free end of the rising piece (11).

3. The handle apparatus according to Claim 2, wherein the rising piece (11) overlaps with the blocking wall (12) in a height direction to completely block the path (10).

4. The handle apparatus according to any one of Claims 1 to 3, further comprising:
an escutcheon portion (14) provided on the handle base (3) and disposable on an outer panel (13) of the door (2) to form an outer surface of the door (2),
wherein the operation arm (5) is inserted through the arm insertion hole (6) formed on the escutcheon portion (14) and connected to a hinge arm (15) formed in a rear surface of the escutcheon portion (14), and
wherein the cylinder lock (9) is fixed to a cylinder fixed portion (16) formed in the rear surface of the escutcheon portion (14).

## Patentansprüche

1. Griffvorrichtung, welche aufweist:
eine Griffbasis (3), die an einer Tür (2) eines Fahrzeugs befestigbar ist, die im geschlossenen Zustand gehalten wird, während sie durch eine Türschlossvorrichtung (1) zurückgehalten wird;
ein Schwenkhebel (4), der innerhalb der Tür (2) zu halten ist und mit der Griffbasis (3) vertikal drehbar verbunden ist, wobei ein Türrückhaltelösebetrieb der Türschlossvorrichtung (1) durch Drehen des Schwenkhebels (4) aus seiner Anfangsdrehposition zu einer Betriebsdrehposition ausgeführt werden kann;
einen Griffhauptkörper (7), der mit der Griffbasis (3) verbunden ist, um von einer Anfangsdrehposition zu einer Betriebsdrehposition hochgezogen zu werden, und der einen Betätigungsarm (5) enthält, der in die Tür (2) durch ein Armeinsetzloch (6) einsetzbar ist, um den Schwenkhebel (4) zu der Betriebsdrehposition anzutreiben, wenn der Griffhauptkörper (7) hochgezogen wird;
ein Blockierstück (8), das an dem Schwenkhebel (4) vorgesehen ist und sich zur Rückseite des Armeinsetzlochs (6) bewegt, wenn der Schwenkhebel (4) in der Betriebsdrehposition angeordnet ist, so dass das Armeinsetzloch (6) von der Innenseite der Tür (2) her blockiert werden kann; und
ein Stehstück (11), das von einem Seitenrand des Blockierstücks (8) zur Außenseite der Tür (2) hin vorsteht, wenn die Griffvorrichtung an der Tür (2) befestigt ist, um einen Weg (10) von der Außenseite der Tür durch eine Lücke zwischen dem Armeinsetzloch (6) und dem Blockierstück (8) zu einer Position um ein Zylinderschloss (9) zum Verriegeln oder Entriegeln der Türschlossvorrichtung (1) zu verengen, wenn der Griffhauptkörper (7) zur Betriebsdrehposition hin gedreht wird,
**dadurch gekennzeichnet, dass**
das Stehstück (11) als Regulierungswand dient, um einen Fall zu verhindern, worin sich ein Werkzeug entlang dem Blockierstück (8) bewegt, während es gegen das vordere Ende des Blockierstücks (8) drückt, um den Weg (10) der Position um das Zylinderschloss (9) herum zu suchen.

2. Die Griffvorrichtung nach Anspruch 1, die ferner aufweist:
eine Blockierwand (12), die von der Griffbasis (3) entlang dem Stehstück (11) des in der Betriebsdrehposition angeordneten Schwenkhebels (4) hochsteht, wobei ein Basisende der Blockierwand (12) in Richtung eines freien Endes des Stehstücks (11) hin angeordnet ist.

3. Die Griffvorrichtung nach Anspruch 2, wobei das Stehstück (11) in Höhenrichtung mit der Blockierwand (12) überlappt, um den Weg (10) vollständig zu blockieren.

4. Die Griffvorrichtung nach einem der Ansprüche 1 bis 3, die ferner aufweist:
einen Schildabschnitt (14), der an der Griffbasis (3) vorgesehen ist und auf einer Außenplatte (13) der Tür (2) anordenbar ist, um eine Außenoberfläche der Tür (2) zu bilden,
wobei der Betätigungsarm (5) durch das Armeinsetzloch (6) eingesetzt ist, das an dem Schildabschnitt (14) ausgebildet ist, und mit einem Schwenkarm (15) verbunden ist, das in einer Rückseite des Schildabschnitts (14) hin ausgebildet ist, und
wobei das Zylinderschloss (9) an einem Zylinderbefestigungsabschnitt (16) befestigt ist, der in der Rückseite des Schildabschnitts (14) ausgebildet ist.

## Revendications

1. Appareil de poignée comprenant :
une base de poignée (3) pouvant être fixée à une portière (2) d'un véhicule qui est maintenue dans un état fermé tout en étant retenue par un appareil de verrouillage de portière (1) ;
un levier oscillant (4) pouvant être maintenu à l'intérieur de la portière (2) et raccordé à la base de poignée (3) pour pouvoir tourner verticalement, une opération de libération de retenue de portière de l'appareil de verrouillage de portière (1) peut être réalisée en faisant tourner le levier oscillant (4) d'une position de rotation initiale à une position de rotation opérationnelle ;
un corps principal de poignée (7) raccordé à la base de poignée (3) pour être remonté d'une position de rotation initiale à une position de rotation opérationnelle et comprenant un bras de commande (5) pouvant être inséré à l'intérieur de la portière (2) à travers un trou d'insertion de bras (6) pour entraîner le levier oscillant (4) dans la position de rotation opérationnelle lorsque le corps principal de poignée (7) est remonté ;
une pièce de blocage (8) qui est prévue sur le levier oscillant (4) et se déplace vers un côté arrière du trou d'insertion de bras (6) lorsque le levier oscillant (4) est positionné dans la position de rotation opérationnelle de sorte que le trou d'insertion de bras (6) peut être bloqué depuis un intérieur de la portière (2) ; et
une pièce de levage (11) faisant saillie d'un bord latéral de la pièce de blocage (8) vers un extérieur de la portière (2) lorsque l'appareil de poignée est fixé sur la portière (2) afin de rétrécir une trajectoire (10) de l'extérieur de la portière en passant par un espace entre le trou d'insertion de bras (6) et la pièce de blocage (8) jusqu'à une position autour d'une serrure à barillet (9) pour verrouiller ou déverrouiller l'appareil de verrouillage de portière (1) lorsque le corps principal de poignée (7) est entraîné en rotation dans la position de rotation opérationnelle,
**caractérisé en ce que** :
la pièce de levage (11) sert de paroi de régulation pour empêcher un cas dans lequel un outil se déplace le long de la pièce de blocage (8) tout en appuyant contre l'extrémité avant de la pièce de blocage (8) afin de rechercher la trajectoire (10) jusqu'à la position autour de la serrure à barillet (9).

2. Appareil de poignée selon la revendication 1, comprenant en outre :
une paroi de blocage (12) se dressant à partir de la base de poignée (3) le long de la pièce de levage (11) du levier oscillant (4) positionnée dans la position de rotation opérationnelle, une extrémité de base de la paroi de blocage (12) étant positionnée dans une direction d'une extrémité libre de la pièce de levage (11).

3. Appareil de poignée selon la revendication 2, dans lequel la pièce de levage (11) chevauche la paroi de blocage (12) dans une direction de hauteur pour bloquer complètement la trajectoire (10).

4. Appareil de poignée selon l'une quelconque des revendications 1 à 3, comprenant en outre :
une partie d'entrée de serrure (14) prévue sur la base de poignée (3) et pouvant être disposée sur un panneau externe (13) de la portière (2) afin de former une surface externe de la portière (2),
dans lequel le bras de commande (5) est inséré par le trou d'insertion de bras (6) formé sur la partie d'entrée de serrure (14) et raccordé à un bras de charnière (15) formé dans une surface arrière de la partie d'entrée de serrure (14), et
dans lequel la serrure à barillet (9) est fixée sur une partie fixe de barillet (16) formée dans la surface arrière de la partie d'entrée de serrure (14).
